# FASCICULE DE BREVET EUROPEEN

(11) **EP 4 259 480 B1**
(45) Date de publication et mention de la délivrance du brevet: **08.07.2026**
(21) Numéro de dépôt: 21830976.3
(22) Date de dépôt: 03.12.2021
(51) Int. Cl.: B60L 58/40

(54) **DISPOSITIF D'ALIMENTATION ÉLECTRIQUE POUR VÉHICULE**
STROMVERSORGUNG FÜR EIN FAHRZEUG
ELECTRICAL POWER SUPPLY FOR A VEHICLE

(30) Priorité: 11.12.2020 FR 2013110
(43) Date de publication de la demande: 18.10.2023
(73) Titulaire: Ampere SAS, 92100 Boulogne-Billancourt (FR)
(72) Inventeur: GERARD, David, 78084 GUYANCOURT (FR); RIPOLL, Christophe, 78084 GUYANCOURT (FR)
(74) Mandataire: Renault Group
(86) Numéro de dépôt international: PCT/EP2021/084277
(87) Numéro de publication internationale: WO 2022/122597

(56) Documents cités:
- FR-A1- 3 053 851

## Description

La présente invention se rapporte au domaine des groupes motopropulseurs électriques des véhicules automobiles électriques ou hybrides, et porte plus particulièrement sur un dispositif d'alimentation électrique de moteurs électriques.

Dans les véhicules électriques ou hybrides, le moteur électrique reçoit la puissance électrique nécessaire à son fonctionnement notamment d'une batterie principale. Une des problématiques du développement des véhicules électriques consiste en l'autonomie de déplacement du véhicule. Une solution envisagée pour prolonger cette autonomie est d'associer à la batterie principale une source d'énergie additionnelle, et il est notamment envisagé d'associer à la batterie principale un système de pile à combustible. Le moteur électrique peut ainsi être alimenté en premier lieu par la batterie principale et, le cas échéant, par la pile à combustible, lorsque la charge de la batterie principale est insuffisante pour continuer à le faire, afin d'augmenter l'autonomie du véhicule lorsque la batterie est totalement déchargée.

Dès lors, il peut être considéré que la pile à combustible et la batterie principale sont agencées parallèlement l'une à l'autre pour permettre des alimentations électriques distinctes du moteur électrique selon le cas d'usage, le moteur électrique pouvant être alimenté simultanément par la première source d'énergie formée par la batterie principale et par la deuxième source d'énergie formée par le système de pile à combustible.

Dans une telle configuration, où le système de pile à combustible est à considérer comme un prolongateur d'autonomie, la pile à combustible peut donc alimenter directement le moteur électrique, en suppléant la batterie principale et peut également, le cas échéant participer à la recharge de la batterie en cours de roulage du véhicule.

Il est connu, aussi bien pour les batteries que pour les systèmes de pile à combustible, de prévoir des moyens de sécurité associés à chaque source d'alimentation et qui permettent notamment de couper la source d'alimentation correspondante en cas d'intervention sur le véhicule. Dans les véhicules automobiles hybrides ou électriques, les sources d'alimentation sont en effet aptes à fournir, pour pouvoir assurer la propulsion électrique, de très grosses quantités d'énergie électrique, à haute tension, et il convient que tout intervention, en cas d'accident ou en cas de réparation par exemple, commence systématiquement par une opération de coupure du courant électrique.

Les moyens de sécurité permettant une telle coupure du courant électrique peuvent aussi bien être des moyens mécaniques, accessibles depuis l'extérieur du véhicule le cas échéant notamment en cas d'accident et de non-accessibilité directe aux sources d'alimentation par les équipes d'intervention, que des moyens pilotés, susceptibles d'être déclenchés par le conducteur ou par un réparateur ayant accès au véhicule par exemple.

Le document TWM525304U divulgue un module d'alimentation électrique de véhicule comportant une pile à combustible et une batterie qui sont aptes chacune à fournir de l'énergie électrique à un moteur, le module comportant un système de pilotage du fonctionnement de chacune des sources. Le module est également configuré pour que la pile à combustible puisse recharger la batterie. Différents relais équipent le module d'alimentation divulgué dans ce document, parmi lesquels on distingue un relais piloté pour couper la jonction électrique entre la pile à combustible et la batterie, lorsqu'un risque de surcharge de la batterie apparaît, et un relais piloté pour couper la jonction électrique entre la batterie et le moteur, l'alimentation du moteur se faisant via la pile à combustible lorsque ce deuxième relais est activé. Il n'est pas fait mention dans ce document d'un relais apte à couper la jonction électrique entre la pile à combustible et le moteur. Un autre exemple de l'état de la technique peut être trouvé dans FR 3 053 851.

La présente invention s'inscrit dans ce contexte et propose un dispositif d'alimentation électrique pour un véhicule automobile électrique ou hybride, comprenant une première source d'alimentation configurée pour alimenter un réseau de tension du véhicule, une deuxième source d'alimentation configurée pour alimenter le réseau de tension du véhicule et/ou recharger la première source d'alimentation, et un module de contrôle configuré pour piloter des moyens de sécurité de la première source d'alimentation et de la deuxième source d'alimentation, caractérisé en ce que le dispositif d'alimentation électrique comprend un boitier métallique contenant la première source d'alimentation, la deuxième source d'alimentation, le module de contrôle et les moyens de sécurité, lesdits moyens de sécurité étant communs aux deux sources d'alimentation.

Grâce au dispositif d'alimentation selon l'invention, il est donc possible d'interrompre le fonctionnement des deux sources d'alimentation en simultané, ce qui renforce l'efficacité de la sécurité dudit dispositif d'alimentation. Le boitier métallique permet de centraliser et de mettre en commun les moyens de sécurité du dispositif d'alimentation et ainsi d'améliorer la réactivité d'une intervention entraînant la coupure simultanée de la première source d'alimentation et de la deuxième source d'alimentation.

La première source d'alimentation ainsi que la deuxième source d'alimentation peuvent être utilisées pour générer de l'énergie électrique assurant la propulsion du véhicule. Ce véhicule peut être entièrement à propulsion électrique ou bien à propulsion hybride, c'est-à-dire pouvant alterner entre une propulsion générée par un moteur thermique et une propulsion générée par un moteur électrique. La mise en fonctionnement de la première source d'alimentation et/ou de la deuxième source d'alimentation telles qu'évoquées permettent d'assurer l'alimentation électrique relative à la propulsion électrique. Par ailleurs, la première source d'alimentation peut par ailleurs être rechargée par de l'énergie électrique générée par le fonctionnement de la deuxième source d'alimentation.

Le module de contrôle est configuré pour détecter une ou plusieurs données pouvant être significatives d'un dysfonctionnement au niveau du dispositif d'alimentation électrique et pour bloquer le fonctionnement de ce dernier, via le pilotage des moyens de sécurité, lorsqu'un tel dysfonctionnement est identifié, ceci afin de prévenir de potentiels endommagements liés à ce dysfonctionnement ou au moins de minimiser l'impact desdits endommagements sur le véhicule.

Le boitier métallique est relié directement au châssis du véhicule afin d'être relié à la terre et ainsi éviter tout désagrément lié à un potentiel courant électrique parcourant le boitier et des entités intégrées au véhicule et pouvant être en contact avec le boitier métallique. Ce dernier est par ailleurs étanche afin d'éviter qu'un dysfonctionnement se déroulant au sein du boitier métallique ne se propage hors de celui-ci.

La présente demande divulgue un dispositif d'alimentation électrique (1) pour un véhicule automobile électrique ou hybride, comprenant une première source d'alimentation (3) configurée pour alimenter un réseau de tension (9) du véhicule, une deuxième source d'alimentation (4) configurée pour alimenter le réseau de tension (9) du véhicule et/ou recharger la première source d'alimentation (3), et un module de contrôle (5) configuré pour piloter des moyens de sécurité (6) de la première source d'alimentation (3) et de la deuxième source d'alimentation (4), caractérisé en ce que le dispositif d'alimentation électrique (1) comprend un boitier métallique (2) contenant la première source d'alimentation (3), la deuxième source d'alimentation (4), le module de contrôle (5) et les moyens de sécurité (6), lesdits moyens de sécurité (6) étant communs aux deux sources d'alimentation (3, 4), le dispositif d'alimentation électrique comprend au moins un organe de calcul de résistance d'isolement relié au module de contrôle, l'organe de calcul de résistance d'isolement étant configuré pour mesurer une résistance électrique d'isolement du boîtier métallique.

Le connecteur permet d'établir une liaison électrique entre les sources d'alimentation et le réseau de tension du véhicule. Le courant électrique généré par la première source d'alimentation et/ou par la deuxième source d'alimentation peut donc être transmis au réseau de tension du véhicule, et notamment assurer la propulsion électrique du véhicule, via ce connecteur.

La première source et la deuxième source sont reliées au connecteur uniquement via ce troisième ensemble de fil électriques, de sorte que le courant généré par la première source et/ou le courant généré par la deuxième source et destiné à l'alimentation électrique du véhicule, via le réseau de tension et le connecteur, passe nécessairement par ce troisième ensemble de fils électriques.

Autrement dit, les moyens de sécurité sont agencés au niveau de l'ensemble de fils électriques communs aux deux sources d'alimentation, et aucun courant ne peut sortir du boîtier métallique via le connecteur relié au réseau de tension du véhicule si les moyens de sécurité sont mis en œuvre pour couper le courant.

Par ensemble de fils électriques il faut comprendre au moins un premier fil faisant office de ligne de courant positif et un deuxième fil faisant office de neutre ou de masse, étant entendu que toute autre configuration permettant la circulation de courant électrique entre les sources d'alimentation et un connecteur de sortie vers un réseau de tension du véhicule est couverte par l'invention dès lors qu'une partie des fils électriques est commune aux deux sources d'alimentation.

Le premier ensemble de fils électriques s'étend entre la première source d'alimentation et la jonction électrique, tandis que le deuxième ensemble de fils électriques s'étend entre la deuxième source d'alimentation et la jonction électrique. Le troisième ensemble de fils électriques, commun aux deux sources d'alimentation, débute au niveau de la jonction électrique et s'étend dans la continuité respectivement du premier ensemble et du deuxième ensemble de fils électriques.

Le courant électrique généré par la première source d'alimentation peut donc circuler au sein du premier ensemble de fils électriques jusqu'à la jonction électrique, puis au sein du troisième ensemble de fils électriques pour permettre d'alimenter le réseau haute tension du véhicule.

Le courant électrique généré par la deuxième source d'alimentation peut lui circuler au sein du deuxième ensemble de fils électriques jusqu'à la jonction électrique, et le circuit électrique est configuré pour que ce courant électrique puisse ensuite circuler au sein du troisième ensemble de fils électriques quand l'objectif est d'alimenter le réseau haute tension du véhicule avec la deuxième source d'alimentation ou bien au sein du premier ensemble de fils électrique à destination de la première source d'alimentation quand l'objectif est de recharger la première source d'alimentation via la deuxième source d'alimentation.

Selon une caractéristique de l'invention, le dispositif d'alimentation électrique comprend un convertisseur électrique installé au sein du boitier métallique, le convertisseur électrique étant connecté au deuxième ensemble de fils électriques et disposé entre la deuxième source d'alimentation et la jonction électrique. Le convertisseur électrique peut par exemple être un convertisseur de type courant continu / courant continu, ou convertisseur DC/DC, et il permet de convertir l'énergie électrique générée par la deuxième source d'alimentation en une énergie électrique à une intensité et une tension adaptée à la recharge de la première source d'alimentation ou à l'alimentation du réseau de tension. L'énergie électrique générée par la deuxième source d'alimentation est donc convertie avant de rejoindre la jonction électrique.

Selon une caractéristique de l'invention, le connecteur est disposé contre une paroi externe du boitier métallique et relié au troisième ensemble de fils électriques. Le connecteur est externe au boitier métallique. Dans ce contexte, afin de pouvoir relier le connecteur au troisième ensemble de fils électriques, la paroi du boîtier métallique sur laquelle est disposé le connecteur est perforée pour autoriser le passage des fils électriques du troisième ensemble de fils électriques à travers le boitier.

Selon une caractéristique de l'invention, les moyens de sécurité comprennent au moins un relais électrique, ledit relais électrique étant apte à être ouvert par le module de contrôle. Le relais électrique est un interrupteur qui, lorsqu'il est ouvert, bloque la circulation du courant électrique dans le circuit électrique correspondant. Selon l'invention, ce relais formant un moyen de sécurité commun aux deux sources d'alimentation est ainsi apte à couper totalement la circulation de courant électrique au sein du dispositif d'alimentation électrique. Le module de contrôle, à la suite d'une détection d'une donnée anormale, peut donc couper le courant électrique en envoyant une commande au relais électrique pour que ce dernier s'ouvre.

Selon une caractéristique de l'invention, les moyens de sécurité comprennent une pluralité de relais électriques respectivement disposés sur chaque fil électrique du troisième ensemble de fils électriques et configurés pour être pilotés par un module de contrôle unique. Lorsque le module de contrôle commande une ouverture des relais électriques, ces derniers s'ouvrent de manière simultanée ou sensiblement simultanée. Comme il y a un relais électrique par fil électrique du troisième ensemble électriques, l'ensemble des connexions électriques entre les sources d'alimentation électrique et le connecteur est coupé dans cette situation. Le module de contrôle, à la suite d'une détection d'une donnée anormale, peut donc couper le courant électrique en envoyant une commande simultanée à chacun des relais électriques formant les moyens de sécurité communs aux deux sources d'alimentation. Ce module de contrôle est avantageusement logé dans le boîtier métallique.

Selon une caractéristique de l'invention, le dispositif d'alimentation électrique comprend au moins un capteur de température relié au module de contrôle, le module de contrôle étant configuré pour d'une part comparer une température mesurée par le capteur de température à un seuil maximal de température, et d'autre part piloter l'au moins un relais électrique en fonction du résultat de la comparaison. En d'autres termes, le module de contrôle est configuré pour ouvrir le ou les relais électriques lorsque le capteur de température mesure une température supérieure à un seuil maximal de température. La température au sein du boitier métallique constitue une des données pouvant être considérée pour entraîner l'ouverture du relais électrique par mesure de sécurité. Plus particulièrement, en cas de départ de feu au sein du boitier métallique, on comprend que la température augmente et le capteur de température va mesurer cette hausse de température. Il convient que le module de contrôle soit en mesure d'identifier une hausse de température représentative d'un départ de feu par rapport à une hausse de température représentative du fonctionnement des sources d'alimentation. A cet effet, le module de contrôle comporte dans une base de données une valeur d'un seuil maximal de température au-delà duquel la chaleur dégagée à l'intérieur du boîtier doit être considérée comme un départ de feu. Le module de contrôle est ainsi configuré pour comparer la valeur de la température mesurée à ladite valeur du seuil maximal de température, et lorsque la température au sein du boitier métallique est considérée comme étant anormalement haute, le module de contrôle envoie des instructions de commande relatives à l'interruption de la connexion électrique via l'ouverture du relais électrique.

Selon une caractéristique de l'invention, le dispositif d'alimentation électrique comprend au moins un organe de calcul de résistance d'isolement relié au module de contrôle, le module de contrôle étant configuré pour d'une part comparer une valeur de résistance d'isolement obtenue par l'organe de calcul à un seuil minimal de résistance d'isolement, et d'autre part piloter l'au moins un relais électrique en fonction du résultat de la comparaison. En d'autres termes, le module de contrôle est configuré pour ouvrir le ou les relais électriques lorsque l'organe de calcul de résistance d'isolement calcule une résistance d'isolement inférieure à un seuil minimal de résistance d'isolement. L'organe de calcul de résistance d'isolement est configuré pour mesurer une résistance électrique d'isolement du boîtier métallique dans son ensemble, sans qu'il soit nécessaire de déterminer la résistance électrique d'isolement spécifique à chaque source d'alimentation et convertisseur présent dans le boîtier. Les moyens mis en œuvre pour un tel calcul sont ainsi simplifiés du fait de l'agencement du dispositif d'alimentation, et notamment des différentes sources d'alimentation, au sein du boîtier métallique. Si la résistance d'isolement est trop faible, c'est-à-dire inférieure à la valeur seuil minimale de résistance d'isolement, alors le dispositif d'alimentation électrique est considéré comme trop peu sécurisé pour poursuivre son fonctionnement. Le module de contrôle ouvre alors le relais électrique.

De manière alternative ou complémentaire à ce qui a été décrit pour la mesure de la température et/ou le calcul de la résistance d'isolement, le module de contrôle peut se baser sur d'autres paramètres pour ouvrir le relais électrique, par exemple une mesure d'une intensité ou d'une tension anormale par le biais d'appareils de mesure adaptés.

Selon une caractéristique de l'invention, les moyens de sécurité comprennent un relais de précharge agencé en parallèle des relais électriques. Le relais de précharge permet d'anticiper un appel de courant du moteur électrique par exemple et de réaliser une hausse progressive du courant électrique délivré par le dispositif d'alimentation électrique jusqu'à atteindre l'intensité de courant électrique nécessaire au fonctionnement optimal du moteur électrique. Le relais de précharge constitue ainsi une sécurité contre une mise en marche trop brusque de l'une et/ou l'autre des sources d'alimentation, pouvant conduire à un dysfonctionnement du dispositif d'alimentation électrique. Il est notable que selon l'invention, le relais de précharge est disposé sur la partie du circuit électrique qui est commune aux deux sources d'alimentation, de sorte que l'on évite de devoir prévoir un relais de précharge pour chacune des sources d'alimentation susceptibles d'être mises en œuvre pour répondre à l'appel de courant du moteur électrique.

Selon une caractéristique de l'invention, les moyens de sécurité comprennent un découpleur électrique manuel. Le découpleur électrique manuel constitue une alternative d'interruption du courant électrique à la commande effectuée par le module de contrôle par pilotage du au moins un relais électrique. Le découpleur électrique manuel est ainsi utile en cas de dysfonctionnement du module de contrôle, ou bien par exemple lors d'une intervention extérieure sur le véhicule à la suite d'un accident ou un incendie du véhicule.

Selon une caractéristique de l'invention, le découpleur électrique manuel comprend un actionneur manuel disposé hors du boitier métallique et un ou plusieurs interrupteurs agencés à l'intérieur du boîtier et reliés à l'actionneur manuel. L'actionneur manuel peut par exemple être un bouton poussoir sur lequel peut appuyer un usager du véhicule en cas d'urgence, ou bien une personne habilitée à porter secours aux usagers du véhicule par exemple en cas d'accident. L'actionneur manuel peut être utilisé afin de limiter les dégâts pouvant être causés par le dispositif d'alimentation électrique encore en marche par exemple après un accident.

Selon une caractéristique de l'invention, le ou les interrupteurs du découpleur électrique manuel sont disposés sur le troisième ensemble de fils électriques. Tout comme le relais électrique, le découpleur électrique doit être disposé sur l'ensemble de fils communs aux deux sources d'alimentation afin que ces dernières puissent être interrompues simultanément ou sensiblement simultanément.

Selon une caractéristique de l'invention, chaque ensemble de fils électriques comprend au moins un organe de sécurité passif, l'organe de sécurité passif agencé sur le troisième ensemble de fils électriques étant distinct des moyens de sécurité communs aux deux sources d'alimentation. Par organe de sécurité passif, il faut comprendre que chaque ensemble de fils électriques inclut par exemple un fusible permettant de couper automatiquement la circulation de courant électrique à travers ces ensembles de fils électriques en fonction de l'état du ou des composants associés à cet ensemble de fil électrique, et notamment en fonction de l'état des sources d'alimentation, par exemple à la suite d'un court-circuit. Les organes de sécurité passifs se distinguent ainsi des moyens de sécurité précédemment évoqués en ce que ces derniers forment un unique ensemble disposé en une zone unique du circuit électrique, à savoir l'ensemble de fils électriques commun aux deux sources d'alimentation, choisie pour pouvoir couper toute transmission de courant électrique en direction du connecteur et donc du réseau électrique du véhicule, et en ce que les moyens de sécurité communs aux différentes sources d'alimentation sont pilotés via un module de contrôle alors que les organes de sécurité passifs sont aptes à se déclencher automatiquement dans une zone propre à une source d'alimentation.

Selon une caractéristique de l'invention, la première source d'alimentation est une batterie électrique et la deuxième source d'alimentation est une pile à combustible. La batterie électrique est apte à stocker de l'énergie électrique et à la renvoyer vers le réseau de tension du véhicule pour alimenter celui-ci et ainsi assurer la propulsion électrique du véhicule. La batterie électrique peut être rechargée par branchement du véhicule à une borne électrique adaptée à cet effet. La batterie électrique peut également être rechargée via un apport en énergie électrique fournie par la pile à combustible.

La pile à combustible génère de l'énergie électrique par réaction chimique entre un combustible tel que du dihydrogène et l'oxygène d'un flux d'air. La pile à combustible fait ainsi partie d'un système de pile à combustible qui comprend par ailleurs un réservoir de dihydrogène et un circuit d'alimentation en air, ainsi que des conduites permettant l'apport de dihydrogène et d'oxygène au sein de la pile à combustible. Le système de pile à combustible peut également comprendre un circuit de refroidissement. Avantageusement, selon une caractéristique de l'invention, seule la pile à combustible est logée dans le boîter métallique du dispositif d'alimentation électrique avec la batterie, les autres composants du système de pile à combustible étant disposés à l'extérieur du boîtier.

L'invention concerne également un véhicule automobile électrique ou hybride comportant un dispositif d'alimentation électrique tel que précédemment décrit.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est un schéma détaillant un exemple d'agencement de deux sources d'alimentation d'un réseau de tension d'un véhicule automobile et par exemple d'un moteur électrique,
[fig 2] est une représentation schématique d'un dispositif d'alimentation électrique selon l'invention,
[fig 3] est un schéma détaillant une installation électrique dudit dispositif d'alimentation électrique.

Tel que cela a été évoqué, l'invention est mise en œuvre dans le cadre d'un véhicule automobile électrique ou hybride, avec des moyens d'alimentation particuliers en ce qu'ils permettent une forte autonomie du véhicule, via l'utilisation de deux sources d'alimentation différentes, et cette invention concerne l'agencement particulier de moyens de sécurité de ces deux sources d'alimentation différentes, notamment en ce que des moyens de sécurité 6 communs aux deux sources d'alimentation 3, 4 sont prévus et logés, au voisinage de ces sources, dans un boîtier 2 étanche, au sein d'un dispositif d'alimentation électrique 1 qui sera décrit plus en détails ci-après.

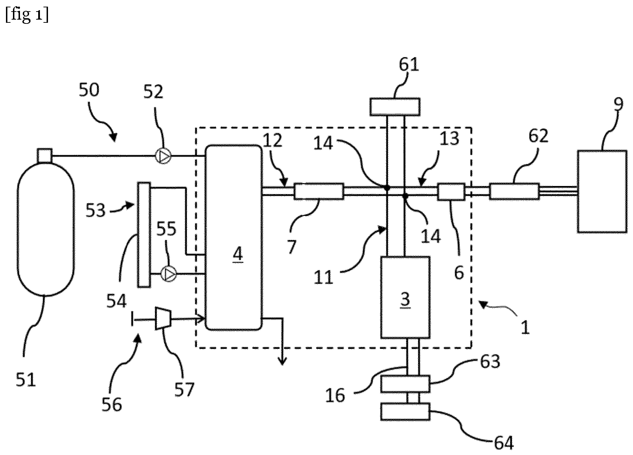

La figure 1 représente schématiquement l'intégration d'un tel dispositif d'alimentation électrique 1 dans un exemple d'agencement assurant notamment une propulsion d'un véhicule hybride ou électrique, c'est-à-dire comprenant au moins un réseau de tension 9 apte à alimenter un moteur électrique. Le réseau de tension du véhicule peut être alimenté par une première source d'alimentation 3 et/ou par une deuxième source d'alimentation 4. Selon l'exemple illustré à la figure 1, la première source d'alimentation 3 est une batterie électrique, tandis que la deuxième source d'alimentation 4 est une pile à combustible. Les deux sources d'alimentation sont aptes au moins à transmettre de l'énergie électrique vers le réseau de tension 9 afin d'assurer la propulsion du véhicule.

La première source d'alimentation 3 peut donc se présenter sous la forme d'une batterie électrique apte à fournir à la demande l'énergie électrique préalablement stockée. Lorsque la première source d'alimentation 3 fournit un courant électrique destiné à alimenter le réseau de tension 9, ledit courant électrique circule au sein d'un premier ensemble de fils électriques 11 connecté à la première source d'alimentation 3 et ce jusqu'à une jonction électrique 14. Par ensemble de fils électriques, il faut comprendre un ou plusieurs fils électriques au sein desquels un courant électrique est apte à circuler. Dans l'exemple de réalisation illustré, et sans que cela soit pour autant limitatif de l'invention, le premier ensemble de fils électriques 11, ainsi que les ensembles de fils électriques décrits par la suite, comportent un fil de courant positif et un fil de masse.

Dans le cas où la deuxième source d'alimentation 4 est une pile à combustible, celle-ci produit de l'énergie électrique par combustion. Plus précisément, il se produit une réaction chimique entre un combustible, par exemple du dihydrogène circulant au sein d'un circuit de dihydrogène 50, et de l'oxygène pouvant être conduit jusqu'à la deuxième source d'alimentation 4 via un circuit d'air 56.

Le dihydrogène est puisé au sein d'un réservoir 51 de dihydrogène et est mis en circulation par le biais d'une première pompe 52 jusqu'à la deuxième source d'alimentation. Au niveau du circuit d'air 56, un compresseur 57 entraîne la circulation de l'air jusqu'à la deuxième source d'alimentation 4. La réaction chimique se produisant entre le dihydrogène et l'air permet ainsi de générer de l'énergie électrique. Une telle réaction chimique étant susceptible de dégager de la chaleur, un circuit de refroidissement 53 circule partiellement au sein de la deuxième source d'alimentation 4 afin de maintenir une température suffisamment basse pour ne pas entraîner de dysfonctionnement. Le circuit de refroidissement 53 comprend une deuxième pompe 55 permettant de mettre en circulation un fluide de refroidissement, par exemple de l'eau glycolée, ainsi qu'un échangeur de chaleur 54 qui permet de décharger les calories du fluide de refroidissement après que ce dernier les a accumulés en traversant la deuxième source d'alimentation 4.

La deuxième source d'alimentation 4 est connectée à un deuxième ensemble de fils électriques 12. L'énergie électrique générée par la deuxième source d'alimentation 4 et sortant de cette dernière circule donc dans un premier temps au sein du deuxième ensemble de fils électriques 12 et traverse un convertisseur électrique 7. Le convertisseur électrique 7 est un convertisseur courant continu / courant continu, ou convertisseur DC/DC, qui permet de convertir le courant électrique générée par la deuxième source d'alimentation 4 en un courant électrique continu adapté à la tension du courant électrique fourni par la première source d'alimentation 3.

Le deuxième ensemble de fils électriques 12 s'étend, conformément au premier ensemble de fils électriques 11, depuis la source d'alimentation qui lui est associée jusqu'à la jonction électrique 14. Il convient de noter que la jonction électrique 14 est configurée de telle sorte que le courant électrique circulant au sein du deuxième ensemble de fils électriques 12 jusqu'à la jonction électrique 14 après avoir été converti par le convertisseur électrique 7 peut circuler par la suite au sein du premier ensemble de fils électriques 11 en direction de la première source d'alimentation 3, dans le but de recharger cette première source d'alimentation 3. On comprend dès lors que la deuxième source d'alimentation peut selon un premier mode de fonctionnement alimenter en courant électrique le réseau de tension du véhicule et le moteur électrique de ce dernier et peut selon un deuxième mode de réalisation alimenter en courant électrique la première source d'alimentation à des fins de recharge.

Le courant électrique peut également circuler au sein d'un troisième ensemble de fils électriques 13 s'étendant à partir de la jonction électrique 14 et permettant de conduire le courant électrique généré par le fonctionnement de la première source d'alimentation et/ou par le fonctionnement de la deuxième source d'alimentation jusqu'au réseau de tension 9. Le troisième ensemble de fils électriques 13 est donc commun aux deux sources d'alimentation. Comme cela a été décrit précédemment, les deux sources d'alimentation peuvent être utilisées pour alimenter le réseau de tension 9. Le courant électrique émanant de l'une ou l'autre des sources d'alimentation peut donc circuler au sein du troisième ensemble de fils électriques 13 une fois parvenu à la jonction électrique 14.

Dans l'exemple illustré sur la figure 1, le troisième ensemble de fils électriques 13 fait circuler le courant électrique jusqu'à un premier convertisseur auxiliaire 62 qui est un convertisseur de type courant continu / courant alternatif, ou convertisseur DC/AC, ce qui d'alimenter le réseau de tension 9 par un courant électrique alternatif.

Par ailleurs, un port de recharge 61 est connecté à la jonction électrique 14 et permet par exemple de recharger la première source d'alimentation 3 par branchement électrique lorsque le véhicule est à l'arrêt.

La première source d'alimentation 3 peut également être configurée pour alimenter une batterie auxiliaire 64. Cette dernière permet par exemple d'alimenter l'éclairage d'un habitacle du véhicule ou tout autre fonction nécessitant un apport d'énergie électrique à l'exception de l'alimentation du réseau de tension 9. On peut ainsi distinguer le réseau de tension 9 susceptible d'alimenter le moteur électrique, dans lequel le courant circule sous une haute tension qui peut être de l'ordre de 400V, et un réseau auxiliaire basse tension, par exemple de l'ordre de 12V, alimentée par la batterie auxiliaire. La batterie auxiliaire 64 est connectée à la première source d'alimentation 3 via un couple de fils électriques auxiliaires 16. Afin d'adapter le courant électrique aux besoins énergétiques des éléments alimentés par la batterie auxiliaire 64, un deuxième convertisseur auxiliaire 63 est disposé au niveau du couple de fils électriques auxiliaires 16, entre la première source d'alimentation 3 et la batterie auxiliaire 64. Le deuxième convertisseur auxiliaire 63 est un convertisseur DC/DC.

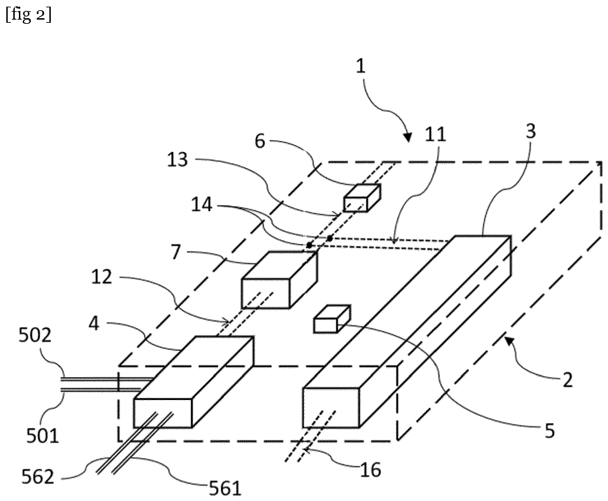

On va maintenant décrire plus en détails, en référence à la figure 2 notamment, le dispositif d'alimentation électrique 1 selon l'invention, représenté en traits pointillés sur la figure 1.

Plus particulièrement, le dispositif d'alimentation électrique 1 comprend la première source d'alimentation 3, la deuxième source d'alimentation 4, le convertisseur électrique 7, le premier ensemble de fils électriques 11, le deuxième ensemble de fils électriques 12, le troisième ensemble de fils électriques 13 et la jonction électrique 14 évoqués sur la figure 1.

Le dispositif d'alimentation électrique 1 comprend également un boitier métallique 2 représenté sur la figure 2 en pointillés, et contenant au moins l'ensemble des éléments listé ci-dessus. Le boitier métallique permet notamment de centraliser les éléments du dispositif d'alimentation électrique 1 au sein d'une même enceinte étanche, relié à la masse du véhicule.

L'aménagement des deux sources d'alimentation, du premier ensemble de fils électriques 11 et du deuxième ensemble de fils électriques 12 est identique à ce qui a été décrit précédemment. Il est possible d'observer au niveau de la première source d'alimentation 3 que le couple de fils électriques auxiliaires 16 traverse le boîtier métallique 2 de sorte que la batterie auxiliaire 64 visible sur la figure 1 s'étend en dehors du boîtier métallique. Ce dernier est agencé de sorte à autoriser la sortie du couple de fils électriques auxiliaires 16. Il en va de même pour une entrée de dihydrogène 501, d'une sortie de dihydrogène 502, d'une entrée d'air 561 et d'une sortie d'air 562 qui traversent le boitier métallique afin de former une liaison avec la deuxième source d'alimentation 4. Ainsi, il convient de noter que dans le cas d'une deuxième source d'alimentation formée par une pile à combustible, le reste des composants participant à former l'ensemble pile à combustible, parmi lesquels le système d'alimentation en hydrogène ou le système de refroidissement, n'est pas logé dans le boîtier métallique et ne font pas ici partie du dispositif d'alimentation électrique 1 au sens de l'invention.

Des moyens de sécurité 6, communs aux deux sources d'alimentation 3, 4, sont disposés au niveau du troisième ensemble de fils électrique 13. Le dispositif d'alimentation électrique 1 comprend un module de contrôle 5 habilité à piloter ces moyens de sécurité 6. Les moyens de sécurité 6 permettent d'interrompre le fonctionnement du dispositif d'alimentation électrique 1 en coupant la circulation du courant électrique à travers le troisième ensemble de fils électrique 13. Ce dernier étant commun aux deux sources d'alimentation tel que précédemment évoqué, le fait d'y disposer les moyens de sécurité 6 permet ainsi de commonaliser les moyens de sécurité du dispositif selon l'invention, de sorte que le pilotage de ces moyens de sécurité 6 permette d'interrompre le fonctionnement des deux sources d'alimentation de manière simultanée en une seule action. Cette interruption de fonctionnement du dispositif d'alimentation électrique 1 par les moyens de sécurité 6 se fait donc de manière plus rapide que dans une configuration où les deux sources d'alimentation possèdent chacune leurs propres moyens de sécurité qu'il faut gérer indépendamment l'un de l'autre.

Le module de contrôle 5 est apte à envoyer une commande aux moyens de sécurité 6 indiquant que la circulation du courant électrique au sein du troisième ensemble de fils électriques 13 doit être interrompue. L'envoi de cette commande peut par exemple être conséquent à la réception et/ou la détection d'une donnée anormale par le module de contrôle 5 tel que cela sera décrit par la suite. La donnée anormale pouvant être significative d'un dysfonctionnement du dispositif d'alimentation électrique 1 ou d'un incident pouvant entraîner des dégâts, la fonction des moyens de sécurité 6 pilotés par le module de contrôle 5 peut être préventive ou bien consister en une limitation de l'incidence de potentiels dégâts survenant à la suite du dysfonctionnement du dispositif d'alimentation électrique 1.

Le module de contrôle 5 et les moyens de sécurité 6 sont également inclus au sein du boitier métallique 2. Ce dernier est étanche afin d'éviter la propagation hors du boitier métallique 2 d'un incident initié au sein de celui-ci, par exemple un départ de feu.

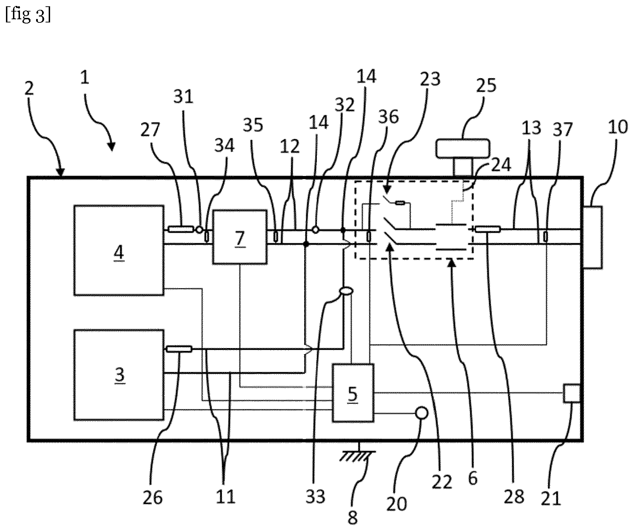

La figure 3 est un représentation schématique détaillée d'une installation électrique du dispositif d'alimentation électrique 1 et permet de détailler structurellement et fonctionnellement le module de contrôle 5, les moyens de sécurité 6 et leurs interactions entre eux.

Sur la figure 3, les moyens de sécurité 6 sont schématisés par un rectangle en pointillés, les éléments inclus au sein dudit rectangle étant tout ou partie de l'un des moyens de sécurité 6. Dans l'exemple illustré, les moyens de sécurité 6 sont en position ouverte, c'est-à-dire qu'ils sont en position telle que le courant électrique ne peut plus circuler au sein du troisième ensemble de fils électriques 13 ni dans l'ensemble de l'installation électrique du dispositif d'alimentation électrique 1. Une telle configuration peut par exemple être due à l'activation desdits moyens de sécurité 6. On comprend que lorsque le dispositif d'alimentation électrique 1 est en fonctionnement normal, avec notamment une circulation de courant allant de l'une et/ou l'autre des sources d'alimentation vers une sortie reliée au réseau de tension du véhicule, les moyens de sécurité sont pilotés pour être fermés et former une continuité électrique avec les fils électriques du troisième ensemble 13.

La figure 3 apporte des caractéristiques structurelles supplémentaires liées au boitier métallique 2. Il est notamment possible d'observer que le boitier métallique comprend une liaison à la terre 8. La liaison à la terre 8 peut par exemple être indirecte, en mettant en place le boitier métallique 2 au sein d'un châssis du véhicule. La liaison à la terre 8 permet de décharger toute énergie électrique pouvant s'être propagée dans la structure du boitier métallique 2.

Le dispositif d'alimentation électrique 1 comprend également un connecteur 10, non inclus au sein du boitier métallique 2. Le connecteur 10 est disposé contre une paroi externe du boitier métallique 2 et est connecté au troisième ensemble de fils électriques 13. Le connecteur 10 est configuré pour être relié au réseau de tension du véhicule 9, ce qui permet de diriger le courant électrique généré par chaque source d'alimentation vers ledit réseau de tension, tel que cela est représenté sur la figure 1. Afin d'assurer la connexion entre le troisième ensemble de fils électriques 13 et le connecteur 10, le boitier métallique 2 peut par exemple être configuré pour autoriser la traversée de sa structure par le troisième ensemble de fils électriques 13.

Les moyens de sécurité 6 comprennent au moins un relais électrique disposé dans le boîtier métallique 2 sur une partie du réseau électrique commun aux deux sources d'alimentation, et plus particulièrement sur la partie du réseau entre la jonction électrique 14 et le connecteur 10. Dans l'exemple illustré sur la figure 3, les moyens de sécurité comportent deux relais électriques 22 pilotés simultanément par le module de contrôle, chacun des deux relais électriques 22 étant disposé sur l'un des deux fils du troisième ensemble de fils électriques 13. Il est toutefois possible de n'intégrer qu'un seul relais électrique 22 en fonction de la configuration du troisième ensemble de fils électriques 13. Les relais électriques 22 autorisent la circulation du courant électrique lorsqu'ils sont en position fermée, et coupent ladite circulation lorsqu'ils sont en position ouverte, tel que cela est illustré sur la figure 3.

La sécurité de fonctionnement, via l'interruption de la circulation du courant électrique, peut donc se faire par l'ouverture de ces relais électriques 22, ladite ouverture étant commandée par le module de contrôle 5. Ce dernier comprend par ailleurs une pluralité de moyens de communication, ici des communications filaires, avec plusieurs éléments du dispositif d'alimentation électrique 1. Grâce à ces moyens de communication, le module de contrôle 5 peut par exemple contrôler une intensité et/ou une tension électrique générées par la première source d'alimentation 3 ou la deuxième source d'alimentation 4. Le module de contrôle 5 peut également commander les moyens de sécurité 6 tel que cela a été mentionné.

Le module de contrôle 5 est également lié à différents organes de mesure et de calcul, parmi lesquels ici un capteur de température 20 et un organe de calcul de résistance d'isolement 21. Le module de contrôle 5 est configuré pour recevoir une valeur mesurée ou calculée par l'un de ces organes, et pour comparer cette valeur à une valeur seuil correspondante. Cette valeur seuil peut notamment être stockée dans une mémoire du module de contrôle. Le module de contrôle réalise les instructions de commande des moyens de sécurité, et par exemple l'ouverture ou non des relais, en fonction du résultat de la comparaison par rapport à ces valeurs seuils.

Le capteur de température 20 mesure la température au sein du boitier métallique 2 et transmet ladite mesure au module de contrôle 5. La mesure de la température est utile par exemple en cas de départ de feu au sein du boitier métallique 2 qui va faire augmenter la température de manière anormale. Le module de contrôle 5 peut ainsi être paramétré pour ouvrir les relais électriques 22 après avoir reçu une mesure de température qui est supérieure à un seuil maximal de température, ledit seuil correspondant à une température au-delà de laquelle la mesure de température est anormale.

L'organe de calcul de résistance d'isolement 21 est connecté au boitier métallique 2 et permet la mesure de la résistance d'isolement de celui-ci. L'organe de calcul de résistance d'isolement 21 peut notamment envoyer un courant électrique dans un circuit incluant le boitier métallique et mesurer l'intensité du courant électrique qui lui revient, pour en déduire une valeur de résistance d'isolement du boitier métallique 2. La baisse de résistance d'isolement du boitier métallique 2, qui peut par exemple être due à l'usure du temps ou bien résulter d'un dysfonctionnement du dispositif d'alimentation électrique 1, témoigne d'un risque de fuite de courant et un danger pour les occupants du véhicule. Également, une résistance d'isolement trop faible peut par exemple entraîner des dommages électriques à un élément du véhicule externe au dispositif d'alimentation électrique 1, le boitier métallique 2 ne garantissant plus un isolement électrique. Le module de contrôle 5 peut alors être configuré pour ouvrir les relais électriques 22 après avoir reçu une valeur de résistance d'isolement qui est inférieure à un seuil minimal de résistance d'isolement.

Les moyens de sécurité 6 comprennent également un relais de précharge 23 disposé en parallèle d'un des relais électriques 22, et plus particulièrement sur le fil électrique positif. Le relais de précharge 23, associé à une résistance, permet d'augmenter progressivement le courant électrique circulant au sein du troisième ensemble de fils électriques 13, par exemple lors du démarrage du véhicule. Le relais de précharge 23 constitue ainsi une sécurité contre une circulation d'un courant électrique trop intense. Tout comme les relais électriques 22, le relais de précharge 23 est commun aux deux sources d'alimentation, en étant ici disposé sur le troisième ensemble de fil électriques, et il est piloté par une commande du module de contrôle 5.

Les moyens de sécurité 6 communs aux deux sources d'alimentation selon l'invention peuvent comprendre également un découpleur électrique manuel 24, qui comporte un actionneur manuel 25 accessible depuis l'extérieur du boitier métallique 2. Le découpleur électrique manuel 24 permet également d'interrompre la circulation du courant électrique au sein du troisième ensemble de fils électriques 13, c'est-à-dire sur la partie du circuit électrique commune aux deux sources d'alimentation, via un ou plusieurs interrupteurs agencés à l'intérieur du boîtier et reliés à l'actionneur manuel 24. Le découpleur électrique manuel 24 constitue une sécurité supplémentaire, par exemple en cas de dysfonctionnement du module de contrôle 5. L'actionneur manuel 25 peut être actionné par une personne tierce par exemple lors d'une intervention des secours à la suite d'un accident.

Afin d'éviter des phénomènes de type court-circuit, le dispositif d'alimentation électrique 1 comprend également un premier organe de sécurité passif 26, un deuxième organe de sécurité passif 27 et un troisième organe de sécurité passif 28, respectivement disposés au niveau du premier ensemble de fils électriques 11, du deuxième ensemble de fils électriques 12 et du troisième ensemble de fils électriques 13. Chacun des organes de sécurité passifs est apte à se déclencher automatiquement pour couper la circulation du courant électrique dans l'ensemble de fils électriques qui lui est propre. Les organes de sécurité passifs se distinguent donc des moyens de sécurité 6 qui sont pilotés par le module de contrôle.

Afin que le module de contrôle 5 puisse gérer et adapter la circulation du courant électrique ainsi que l'intensité et la tension de celui-ci, les ensembles de fils électriques comprennent plusieurs capteurs d'intensité électrique 31, 32, 33. Un premier capteur d'intensité électrique 31 est disposé sur le deuxième ensemble de fils électriques 12 entre la deuxième source d'alimentation 4 et le convertisseur électrique 7, un deuxième capteur d'intensité électrique 32 est disposé sur le deuxième ensemble de fils électriques 12 entre le convertisseur électrique 7 et la jonction électrique 14, et un troisième capteur d'intensité électrique 33 est disposé sur le premier ensemble de fils électriques 11 entre la première source d'alimentation 3 et la jonction électrique 14. Par ailleurs, des capteurs de tension 34, 35, 36, 37 sont disposés respectivement sur le deuxième ensemble de fils électriques 12 entre la deuxième source d'alimentation 4 et le convertisseur électrique 7 et entre le convertisseur électrique 7 et la jonction électrique 14, ainsi que sur le troisième ensemble de fils électriques 13 entre la jonction électrique 14 et les moyens de sécurité 6, et entre les moyens de sécurité 6 et le connecteur 10.

L'ensemble des mesures relevées par les capteurs suscités est transmis au module de contrôle 5, qui peut alors adapter via les moyens de communication, notamment filaires, précédemment mentionnées le fonctionnement des sources d'alimentation ou du convertisseur électrique 7. Lesdites mesures peuvent également être un indicateur pouvant conduire à l'ouverture des relais électriques 22 par mesure de sécurité.

A titre d'exemple non limitatif, les mesures d'intensité relevées par les capteurs d'intensité électrique 31, 32, 33 peuvent servir à la détection d'un courant d'intensité d'une valeur plus importante que les valeurs de régulation, mais bien en dessous des seuils de déclenchement des organes de sécurité passifs 26, 27,28, et le module de contrôle 5 peut alors générer une instruction de commande adaptée. Par exemple, un emballement de la charge par le convertisseur électrique 7 à la suite d'un problème de régulation peut être détecté par le premier capteur d'intensité électrique 31 et cette détection peut permettre au module de contrôle 5 de générer une instruction relative à l'arrêt de la deuxième source d'alimentation 4, par exemple par l'extinction en alimentation d'hydrogène et l'ouverture des relais. Le troisième capteur d'intensité électrique 33 peut détecter de la même manière un courant de charge de la première source d'alimentation 3 par la deuxième source d'alimentation 4 qui est trop important et qui nécessite l'arrêt de la deuxième source d'alimentation 4 et/ou du convertisseur électrique 7. D'une façon équivalente, la surveillance des tensions par les capteurs de tension 34, 35, 36, 37 permet de détecter un problème de surtension locale en dehors des plages de fonctionnement normale, et de la même manière commander le fonctionnement des sources d'alimentation 3, 4, du convertisseur d'énergie électrique 7 et le cas échéant des moyens de sécurité 6.

Bien sûr, l'invention n'est pas limitée aux exemples qui viennent d'être décrits et de nombreux aménagements peuvent être apportés à ces exemples sans sortir du cadre de l'invention, dès lors que l'invention, telle qu'elle vient d'être décrite, propose un dispositif d'alimentation électrique comprenant au moins deux sources d'alimentation différentes et des moyens de sécurité communs auxdites sources d'alimentation.

## Revendications

1. Dispositif d'alimentation électrique (1) pour un véhicule automobile électrique ou hybride, comprenant une première source d'alimentation (3) configurée pour alimenter un réseau de tension (9) du véhicule, une deuxième source d'alimentation (4) configurée pour alimenter le réseau de tension (9) du véhicule et/ou recharger la première source d'alimentation (3), et un module de contrôle (5) configuré pour piloter des moyens de sécurité (6) de la première source d'alimentation (3) et de la deuxième source d'alimentation (4), **caractérisé en ce que** le dispositif d'alimentation électrique (1) comprend un boitier métallique (2) contenant la première source d'alimentation (3), la deuxième source d'alimentation (4), le module de contrôle (5) et les moyens de sécurité (6), lesdits moyens de sécurité (6) étant communs aux deux sources d'alimentation (3, 4), le dispositif d'alimentation électrique comprend au moins un organe de calcul de résistance d'isolement relié au module de contrôle, l'organe de calcul de résistance d'isolement étant configuré pour mesurer une résistance électrique d'isolement du boîtier métallique.

2. Dispositif d'alimentation électrique (1) selon la revendication 1, comprenant un premier ensemble de fils électriques (11) connecté à la première source d'alimentation (3) et un deuxième ensemble de fils électriques (12) connecté à la deuxième source d'alimentation (4), le premier ensemble de fils électriques (11) et le deuxième ensemble de fils électriques (12) étant reliés entre eux au niveau d'une jonction électrique (14), le dispositif d'alimentation électrique (1) comprenant un troisième ensemble de fils électriques (13) communs aux deux sources d'alimentation (3, 4) et s'étendant à partir de la jonction électrique (14) en direction d'un connecteur (10) configuré pour être relié à un réseau de tension électrique du véhicule, les moyens de sécurité (6) étant agencés au niveau du troisième ensemble de fils électriques (13).

3. Dispositif d'alimentation électrique (1) selon la revendication précédente, dans lequel les moyens de sécurité (6) comprennent une pluralité de relais électriques (22) respectivement disposés sur chaque fil électrique du troisième ensemble de fils électriques (13) et configurés pour être pilotés par un module de contrôle (5) unique.

4. Dispositif d'alimentation électrique (1) selon la revendication précédente, dans lequel les moyens de sécurité (6) comprennent un relais de précharge (23) agencé en parallèle des relais électriques (22).

5. Dispositif d'alimentation électrique (1) selon l'une quelconque des revendications précédentes, dans lequel les moyens de sécurité (6) comprennent un découpleur électrique manuel (24).

6. Dispositif d'alimentation électrique (1) selon la revendication précédente, dans lequel le découpleur électrique manuel (24) comprend un actionneur manuel (25) disposé hors du boitier métallique (2) et un ou plusieurs interrupteurs agencés à l'intérieur du boîtier et reliés à l'actionneur manuel (24).

7. Dispositif d'alimentation électrique (1) selon la revendication 5 ou 6, en combinaison avec la revendication 2, dans lequel le ou les interrupteurs du découpleur électrique manuel (24) sont disposés sur le troisième ensemble de fils électriques (13).

8. Dispositif d'alimentation électrique (1) selon l'une quelconque des revendications précédentes, en combinaison avec la revendication 2, dans lequel chaque ensemble de fils électriques (11, 12, 13) comprend au moins un organe de sécurité passif (26, 27, 28), l'organe de sécurité passif (28) agencé sur le troisième ensemble de fils électriques (13) étant distinct des moyens de sécurité (6) communs aux deux sources d'alimentation (3, 4).

9. Dispositif d'alimentation électrique (1) selon l'une des revendications précédentes, dans lequel la première source d'alimentation (3) est une batterie électrique et la deuxième source d'alimentation (4) est une pile à combustible.

10. Véhicule automobile, électrique ou hybride, comportant un dispositif d'alimentation électrique selon l'une des revendications précédentes.

## Patentansprüche

1. Elektrische Versorgungsvorrichtung (1) für ein Elektro- oder Hybridkraftfahrzeug, umfassend eine erste Versorgungsquelle (3), die dazu ausgelegt ist, ein Spannungsnetz (9) des Fahrzeugs zu versorgen, eine zweite Versorgungsquelle (4), die dazu ausgelegt ist, das Spannungsnetz (9) des Fahrzeugs zu versorgen und/oder die erste Versorgungsquelle (3) aufzuladen, und ein Steuermodul (5), das dazu ausgelegt ist, Sicherheitseinrichtungen (6) der ersten Versorgungsquelle (3) und der zweiten Versorgungsquelle (4) anzusteuern, **dadurch gekennzeichnet, dass** die elektrische Versorgungsvorrichtung (1) ein Metallgehäuse (2) umfasst, das die erste Versorgungsquelle (3), die zweite Versorgungsquelle (4), das Steuermodul (5) und die Sicherheitseinrichtungen (6) enthält, wobei die Sicherheitseinrichtungen (6) den beiden Versorgungsquellen (3, 4) gemeinsam sind, wobei die elektrische Versorgungsvorrichtung mindestens ein Element zur Berechnung des Isolationswiderstands umfasst, das mit dem Steuermodul verbunden ist, wobei das Element zur Berechnung des Isolationswiderstands dazu ausgelegt ist, einen elektrischen Isolationswiderstand des Metallgehäuses zu messen.

2. Elektrische Versorgungsvorrichtung (1) nach Anspruch 1, umfassend einen ersten Satz von elektrischen Leitern (11), der an die erste Versorgungsquelle (3) angeschlossen ist, und einen zweiten Satz von elektrischen Leitern (12), der an die zweite Versorgungsquelle (4) angeschlossen ist, wobei der erste Satz von elektrischen Leitern (11) und der zweite Satz von elektrischen Leitern (12) an einer elektrischen Verbindung (14) miteinander verbunden sind, wobei die elektrische Versorgungsvorrichtung (1) einen dritten Satz von elektrischen Leitern (13) umfasst, die den beiden Versorgungsquellen (3, 4) gemeinsam sind und von der elektrischen Verbindung (14) aus in Richtung eines Steckverbinders (10) verlaufen, der dazu ausgelegt ist, mit einem elektrischen Spannungsnetz des Fahrzeugs verbunden zu werden, wobei die Sicherheitseinrichtungen (6) an dem dritten Satz von elektrischen Leitern (13) angeordnet sind.

3. Elektrische Versorgungsvorrichtung (1) nach dem vorhergehenden Anspruch, bei der die Sicherheitseinrichtungen (6) eine Mehrzahl von elektrischen Relais (22) umfassen, die jeweils an jedem elektrischen Leiter des dritten Satzes von elektrischen Leitern (13) angeordnet sind und dazu ausgelegt sind, von einem einzigen Steuermodul (5) angesteuert zu werden.

4. Elektrische Versorgungsvorrichtung (1) nach dem vorhergehenden Anspruch, bei der die Sicherheitseinrichtungen (6) ein Vorladerelais (23) umfassen, das parallel zu den elektrischen Relais (22) angeordnet ist.

5. Elektrische Versorgungsvorrichtung (1) nach einem der vorhergehenden Ansprüche, bei der die Sicherheitseinrichtungen (6) einen manuellen elektrischen Entkoppler (24) umfassen.

6. Elektrische Versorgungsvorrichtung (1) nach dem vorhergehenden Anspruch, bei welcher der manuelle elektrische Entkoppler (24) einen manuellen Betätiger (25) umfasst, der außerhalb des Metallgehäuses (2) angeordnet ist, und einen oder mehrere Schalter, die innerhalb des Gehäuses angeordnet und mit dem manuellen Betätiger (24) verbunden sind.

7. Elektrische Versorgungsvorrichtung (1) nach Anspruch 5 oder 6 in Kombination mit Anspruch 2, bei welcher der oder die Schalter des manuellen elektrischen Entkopplers (24) an dem dritten Satz von elektrischen Leitern (13) angeordnet sind.

8. Elektrische Versorgungsvorrichtung (1) nach einem der vorhergehenden Ansprüche in Kombination mit Anspruch 2, bei welcher jeder Satz von elektrischen Leitern (11, 12, 13) mindestens ein passives Sicherheitselement (26, 27, 28) umfasst, wobei das passive Sicherheitselement (28), das an dem dritten Satz von elektrischen Leitern (13) angeordnet ist, von den Sicherheitseinrichtungen (6), die den beiden Versorgungsquellen (3, 4) gemeinsam sind, verschieden ist.

9. Elektrische Versorgungsvorrichtung (1) nach einem der vorhergehenden Ansprüche, bei der die erste Versorgungsquelle (3) eine elektrische Batterie ist und die zweite Versorgungsquelle (4) eine Brennstoffzelle ist.

10. Elektro- oder Hybridkraftfahrzeug, das eine elektrische Versorgungsvorrichtung nach einem der vorhergehenden Ansprüche aufweist.

## Claims

1. Electric power supply device (1) for an electric or hybrid motor vehicle, comprising a first power source (3) configured to supply power to a voltage network (9) of the vehicle, a second power source (4) configured to supply power to the voltage network (9) of the vehicle and/or recharge the first power source (3), and a control module (5) configured to control safety means (6) of the first power source (3) and of the second power source (4), **characterized in that** the electric power supply device (1) comprises a metal housing (2) containing the first power source (3), the second power source (4), the control module (5) and the safety means (6), said safety means (6) being shared by the two power sources (3, 4), the electric power supply device comprising at least one member for calculating insulation resistance connected to the control module, the member for calculating insulation resistance being configured to measure an electrical insulation resistance of the metal housing.

2. Electric power supply device (1) according to Claim 1, comprising a first set of electrical wires (11) which is connected to the first power source (3) and a second set of electrical wires (12) which is connected to the second power source (4), the first set of electrical wires (11) and the second set of electrical wires (12) being connected to one another at an electrical junction (14), the electric power supply device (1) comprising a third set of electrical wires (13) which are shared by the two power sources (3, 4) and extend from the electrical junction (14) in the direction of a connector (10) configured to be connected to a voltage network of the vehicle, the safety means (6) being arranged on the third set of electrical wires (13).

3. Electric power supply device (1) according to the preceding claim, in which the safety means (6) comprise a plurality of electrical relays (22) which are arranged on each electrical wire in the third set of electrical wires (13), respectively, and configured to be controlled by a single control module (5).

4. Electric power supply device (1) according to the preceding claim, in which the safety means (6) comprise a pre-charge relay (23) arranged in parallel with the electrical relays (22).

5. Electric power supply device (1) according to any one of the preceding claims, in which the safety means (6) comprise a manual electrical decoupler (24).

6. Electric power supply device (1) according to the preceding claim, in which the manual electrical decoupler (24) comprises a manual actuator (25) arranged outside the metal housing (2) and one or more switches arranged inside the housing and connected to the manual actuator (24).

7. Electric power supply device (1) according to Claim 5 or 6, in combination with Claim 2, in which the one or more switches of the manual electrical decoupler (24) are arranged on the third set of electrical wires (13).

8. Electric power supply device (1) according to any one of the preceding claims, in combination with Claim 2, in which each set of electrical wires (11, 12, 13) comprises at least one passive safety member (26, 27, 28), the passive safety member (28) arranged on the third set of electrical wires (13) being separate from the safety means (6) shared by the two power sources (3, 4).

9. Electric power supply device (1) according to one of the preceding claims, in which the first power source (3) is an electric battery and the second power source (4) is a fuel cell.

10. Electric or hybrid motor vehicle comprising an electric power supply device according to one of the preceding claims.
